# EUROPÄISCHE PATENTSCHRIFT

(11) **EP 1 129 517 B1**
(45) Veröffentlichungstag und Bekanntmachung des Hinweises auf die Patenterteilung: **26.11.2003**
(21) Anmeldenummer: 99944329.4
(22) Anmeldetag: 03.08.1999
(51) Int. Cl.: H02K 1/16, H02K 15/02

(54) **VERFAHREN ZUR HERSTELLUNG EINES STATORS, STATOR UND ELEKTRISCHE MASCHINE MIT DIESEM STATOR**
METHOD FOR PRODUCING A STATOR, STATOR AND ELECTRIC MACHINE WITH THIS STATOR
PROCEDE DE PRODUCTION D'UN STATOR, STATOR ET MACHINE ELECTRIQUE DOTEE DE CE STATOR

(30) Priorität: 09.11.1998 DE 19851363
(43) Veröffentlichungstag der Anmeldung: 05.09.2001
(73) Patentinhaber: DaimlerChrysler AG, 70567 Stuttgart (DE)
(72) Erfinder: BITSCHE, Otmar, D-70329 Stuttgart (DE); FÜRST, Matthias, D-71384 Weinstadt (DE); HELLER, Andreas, D-71106 Magstadt (DE); KINDER, Jutta, D-73728 Esslingen (DE); KIRN, Oliver, D-73730 Esslingen (DE); KÖNIG, Werner, D-71083 Herrenberg (DE); MOCH, Andreas, D-71263 Weil der Stadt (DE); MÜLLER, Daniel, D-73037 Göppingen (DE); NICKEL, Armin, D-73728 Esslingen (DE); ZIEKER, Roland, D-73061 Ebersbach (DE); FRIEDRICH, Rolf, 73614 Schorndorf (DE); GOGEL, Andreas, 73630 Remshalden (DE); ILSE, Friedrich, 71554 Weissach im Tal (DE); TEUFEL, Hans-Dieter, 70736 Fellbach (DE); ZENTLER, Marcus, 74078 Heilbronn (DE)
(86) Internationale Anmeldenummer: EP9905629
(87) Internationale Veröffentlichungsnummer: WO00028638

(56) Entgegenhaltungen:
- DE-A- 19 633 399
- DE-C- 19 643 561
- US-A- 4 102 040
- US-A- 5 256 926
- US-A- 5 583 387
- PATENT ABSTRACTS OF JAPAN vol. 1996, no. 2, 29. Februar 1996 (1996-02-29) & JP 07 274422 A (YASKAWA ELECTRIC CORP), 20. Oktober 1995 (1995-10-20)

## Beschreibung

Die Erfindung betrifft ein Verfahren zur Herstellung eines Stators und/oder eines Rotors, einen Stator und einen Rotor und eine elektrische Maschine mit einem Rotor und einem Stator gemäß den Oberbegriffen der unabhängigen Ansprüche.

Es ist bekannt, Statoren und auch Rotoren von elektrischen Maschinen durch gestanzte Einzelbleche herzustellen und zu Blechpaketen zusammenzufügen. So werden z.B. einzelne, bevorzugt runde Statorbleche so gestanzt, daß sie im inneren Bereich die vorgesehene Zahl von Statorzähnen aufweisen. Anschließend werden sie in Richtung der Statorachse aufeinandergelegt und verbunden, so daß ein kompaktes Statorblechpaket entsteht. Die nach innen zur zentralen Achse gerichteten Statorzähne werden mit Draht umwickelt, so daß jeder Statorzahn oder mehrere Statorzähne anschließend mit jeweils einer Spule umgeben sind, deren Wicklungsebenen parallel zur Statorachse ausgerichtet sind.

Die Montage der Spulen ist wegen der komplexen Form des Stators sehr aufwendig und schwierig. Besonders bei Spulen mit relativ großen Drahtdurchmessern und starren Drähten ist ein maschinelles Wickeln und Montieren der Spulen kaum möglich. Ein weiteres Problem stellt das Einbringen einer elektrischen Isolierung zwischen Spulen und Statorzähne und Nutfuß dar, da das Innere des Stators nicht frei zugänglich ist. Ebenso kann das Haltern von bereits eingesetzten Spulen beim Einsetzen weiterer Spulen ein Montageproblem darstellen.

Bei der Herstellung derartiger gestanzter Rotoren und Statoren ist der Materialverbrauch hoch, da viel Material nicht genutzt werden kann und beim Stanzen als Abfall anfällt.

In der US-A1-4 102 040 ist ein Verfahren zur Herstellung eines Rotors mit einer geschlossenen Umfangsform offenbart, wobei der Stator in Umfangsrichtung aus mindestens zwei Segmenten zusammengesetzt oder aus einem Band gebogen wird. Aus der US-A1-5 256 926 ist ein Verfahren bekannt, einen Stator aus einzelnen Segmenten zusammenzusetzen. Die einzelnen Segmente bestehen aus Kreisabschnitten mit vorgeformten Statorzähnen und werden durch Einhaken miteinander verbunden.

Aus der DE-A1-196 33 399 ist bekannt, einen den Stator einer elektrischen Maschine bildenden Eisenkern, der mit die Spulen der Statorwicklung aufnehmenden Nuten versehen ist und einen an die Nuten anschließenden Rückschlußteil aufweist. Der Stator wird gefertigt, indem ein Eisenkern aus einem langgestreckten Band rundgebogen wird. Der Aufwand für die Herstellung des Stators kann dadurch erheblich vermindert werden, daß der Eisenkern zumindest bei einem Teil der Nuten von deren Nutgrund ausgehend nach außen gerichtete konische Schlitze aufweist, durch die ein gelenkartig wirkender Verbindungssteg gebildet ist.

Es ist die Aufgabe der Erfindung, ein Verfahren anzugeben, mit dem die Fertigung von Statoren vereinfacht wird und eine bessere Materialausnutzung möglich ist, sowie einen Stator und eine elektrische Maschine anzugeben, die einen geringeren Materialaufwand erfordern.

Diese Aufgabe wird durch die Merkmale der unabhängigen Ansprüche gelöst.

Erfindungsgemäß wird beim Umwickeln der Statorzähne die Querschnittsform des Spulendrahts geändert. Damit ist eine vorteilhafte Ausnutzung des Raums zwischen den Statorzähnen möglich.

Es ist vorteilhaft, ein Segment oder mehrere Segmente vor dem Zusammensetzen des Stators zu biegen und dann die Segmente zusammenzufügen.

Beim Zusammensetzen eines Stators bzw. Rotors aus Segmenten sind kreisbogenförmige Segmente zweckmäßig. Günstig ist, die Segmente durch Zusammenschieben und/oder Einhaken zusammenzufügen.

In einem günstigen Verfahrensschritt bei der Herstellung eines bevorzugten Stators kann Spulendraht auf zumindest einen Statorzahn gewickelt werden, bevor das Band und/oder die Segmente zu einem Stator umgeformt oder zusammengesetzt werden und so ein Stator mit einer geschlossenen Querschnittsform gebildet wird. Damit ist eine maschinelle Wicklung der Spulen möglich, indem Spulendraht auf die Zähne des noch langgestreckten Bandes aufgebracht wird.

Zweckmäßig ist, wenn Statorzähne mit dem Band und/oder den Segmenten jeweils einstückig ausgebildet werden.

In einer bevorzugten Ausbildung der Erfindung wird das Band und/oder werden die Segmente durch jeweils ein Blechpaket gebildet, wobei das Blechpaket durch in Richtung der Motorachse aufeinandergelegte, gestanzte Blechscheiben zusammengesetzt wird. Der besondere Vorteil ist, daß beim Stanzen der Bänder der Blechabfall. im Gegensatz zum Stanzen von Statoren mit geschlossenem Umfang erheblich reduziert werden kann.

In einem weiteren bevorzugten Verfahrensschritt wird ein Stator durch mindestens zwei Blechpakete, welche entlang der zentralen Achse des Motors aufeinandergelegt sind, zusammengesetzt. Der Vorteil ist, daß etwaige fertigungsbedingte Schwankungen in der Höhe des Stators bzw. Rotors ausgeglichen werden können. Vorzugsweise werden derartige Blechpakete in Umfangsrichtung verdreht und zusammengesetzt.

In einer weiteren bevorzugten Ausführung wird beim Wickeln der einer Spule durch Umwickeln eines Statorzahns mit Spulendraht der Außendurchmesser der Spule so verändert, daß der größere Außendurchmesser der Spule am Nutfuß ausgebildet wird. Damit ist eine weitere vorteilhafte Ausnutzung des Raums zwischen den Statorzähnen möglich. Es können beim Wickeln einer Spule sowohl der Drahtquerschnitt als auch der Durchmesser der Spule verändert werden.

Ein bevorzugter erfindungsgemäßer Stator weist zumindest eine Stoßnaht in einer Ebene senkrecht zu seiner zentralen Achse auf. Die Stoßnaht kann beliebig verlaufen, insbesondere radial, gekrümmt, wellig oder gezackt.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei
- Fig. 1: eine Prinzipdarstellung eines erfindungsgemäßen Verfahrensschritts vor dem Formen des Stators,
- Fig. 2: eine Prinzipdarstellung eines erfindungsgemäßen Stators in gebogener Form,
- Fig. 3: eine Prinzipdarstellung eines weiteren erfindungsgemäßen Verfahrensschritts während des Formens,
- Fig. 4: eine Prinzipdarstellung eines weiteren erfindungsgemäßen Verfahrensschritts während des Formens,
- Fig. 5: eine Prinzipdarstellung eines weiteren erfindungsgemäßen Stators vor dem Formen,
- Fig. 6: eine Prinzipdarstellung von zwei gestanzten Bändern für einen erfindungsgemäßen Rotor,
- Fig. 7: eine Prinzipdarstellung einer Draufsicht auf die Stirnfläche eines erfindungsgemäßen Rotors nach dem Formen darstellt.

Die Erfindung ist für elektrische Maschinen geeignet, welche einen Stator und einen Rotor aufweisen, wie etwa Asynchronmaschinen, Reluktanzmaschinen und dergleichen.

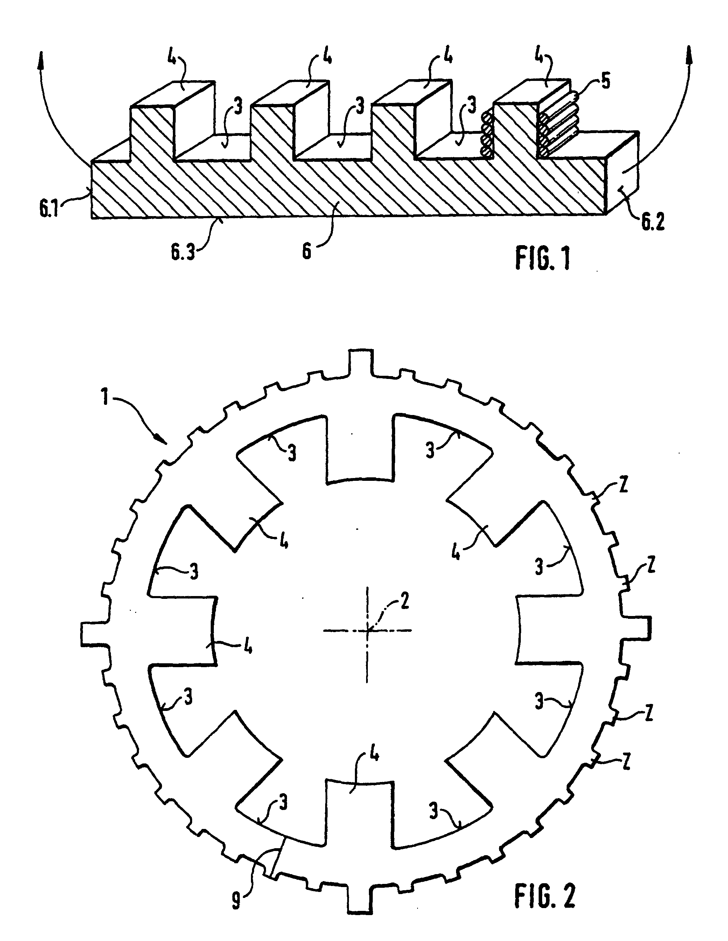

In Fig. 1 ist ein Fertigungsschritt für einen erfindungsgemäßen Stator dargestellt, bevor dieser in eine geschlossene Querschnittsform gebracht wird. Der Stator ist als langgestrecktes, ebenes Band 6 mit einem ersten Ende 6.1 und einem zweiten Ende 6.2 ausgebildet. Die Länge des Bandes 6 in Umfangsrichtung des Stators kann geringer sein als die Höhe des Stators. Das Band 6 weist Statorzähne 4 auf, die auf derselben Seite des Bandes 6 angeordnet sind, während die Rückseite 6.3 des Bandes, welche später die äußere Begrenzung des Stators bilden kann, keine Statorzähne aufweist.

Die Statorzähne 4 sind in diesem Zustand von außen frei zugänglich und können demnach auf einfache Weise mit Spulendraht 5 umwickelt werden. Dies ist insbesondere maschinell möglich und erlaubt eine großserientaugliche Fertigung von derartigen Statoren. Ebenso einfach kann nunmehr eine etwaige elektrische Isolation zwischen Stator 1 und Spulendraht 5, insbesondere eine Nutfußisolation, in die Nuten 3 zwischen den Statorzähnen 4 angebracht werden. In der Figur ist der Spulendraht 5 im Querschnitt als einlagige Wicklung an einem Statorzahn 4 angedeutet.

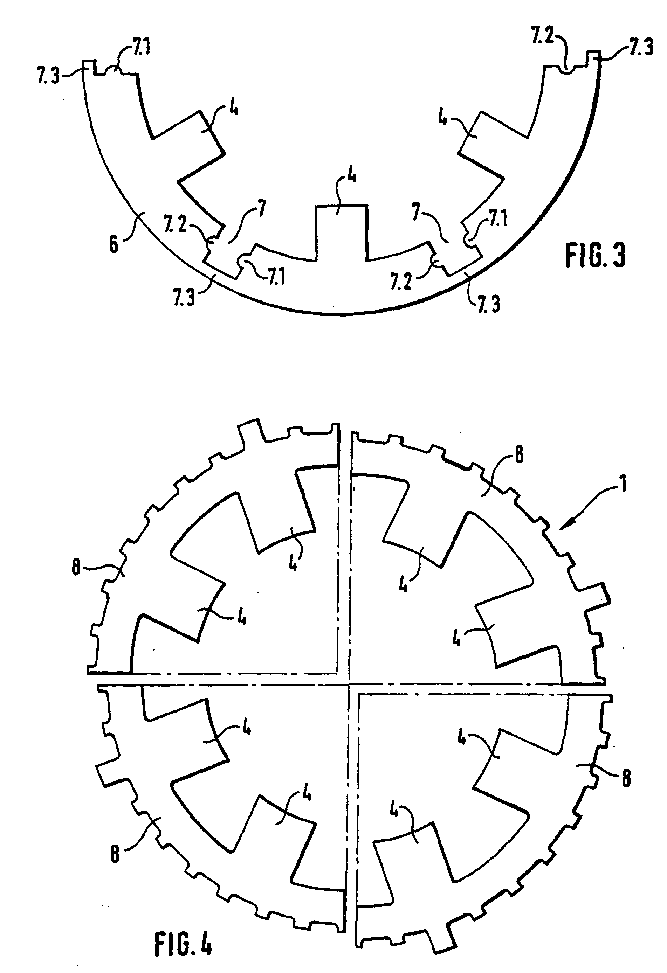

Anschließend wird das Band 6 zum Stator umgeformt. Dies kann gemäß der Erfindung auf zwei Arten erfolgen. Entweder wird das Band 6 mit einem geeigneten Werkzeug gebogen und in eine geschlossene Querschnittsform gebracht, indem das' erste Ende 6.1 mit dem zweiten Ende 6.2 verbunden wird. Dies ist durch Pfeile in der Figur angedeutet. Oder der Stator wird durch Segmente in Umfangsrichtung zusammengesetzt, bis ein geschlossener Stator entsteht, indem eines der Enden 6.1 oder 6.2 des Bandes 6 mit einem weiteren Ende eines weiteren Bandes zusammengesetzt wird etc., wie in Fig. 4 skizziert. Vorzugsweise entspricht die so hergestellte geschlossene Querschnittsform derjenigen Form, in der der Stator mit Rotor und Gehäuse zusammengebaut wird. Die Form kann rund oder eckig sein und kann gegebenenfalls noch bearbeitet werden. Das gebogene Band 6 wird in seiner endgültigen Form fixiert. Die Stoßnaht kann mit einem geeigneten Fügeprozeß verschlossen, insbesondere verschweißt oder verklebt werden. Der Stator wird gegebenenfalls in ein Gehäuse (nicht dargestellt) eingebracht.

Ein erfindungsgemäß hergestellter Stator 1 ist in Fig. 2 dargestellt. Der Stator 1 weist eine im wesentlichen runde Querschnittsform auf mit einer zentralen Achse 2. Eine Stoßkante oder Stoßnaht 9, an der die beiden Bandenden 6.1 und 6.2 verbunden wurden, ist angedeutet. Die Stoßnaht kann unterschiedlich ausgebildet sein, insbesondere gerade oder gekrümmt sein oder mit ineinandergreifenden Zacken versehen sein, um den Einfluß etwaiger Luftspalte zu minimieren.

Im dargestellten Beispiel sind zusätzlich zu den Statorzähnen 4 am inneren Umfang des Stators 1 am äußeren Umfang des Stators 1 Zacken Z ausgebildet, von denen der Übersichtlichkeit wegen nur einige mit Bezugszeichen bezeichnet sind. In einem bevorzugten Stator 1 für einen Reluktanzmotor werden diese nach dem Einbau in ein etwaiges Gehäuse (nicht dargestellt) von dem Gehäuse an der Kontaktfläche abgedichtet und fungieren als Kühlkanäle. Die Gestaltung des äußeren Umfangs des Stators 1 kann dem jeweiligen Einsatzzweck und der jeweiligen elektrischen Maschine, für die der Stator vorgesehen ist, angepaßt werden.

Das Band 6 und/oder die Statorzähne 4 können aus Massivmaterial gefertigt sein. Eine besonders bevorzugte Möglichkeit besteht darin, Blechstreifen auszustanzen und in Richtung der Statorachse aufeinander zu stapeln. Das Band 6 wird dann aus in Achsrichtung 2 des Stators aneinandergereihten Blechen zusammengesetzt. Der ganz besondere Vorteil ist hier, daß die erfindungsgemäße Herstellung des Stators eine erhebliche Materialersparnis ermöglicht. Beim Ausstanzen von Statorblechen mit geschlossenem Umfang fällt eine erhebliche Menge an Materialabfall an, sowohl aus dem Inneren des Stators als auch, insbesondere bei runden Statorblechen, aus dem Außenbereich. Beim Ausstanzen von langgestreckten Bändern, welche anschließend erst zu einem geschlossenen Umfang gebogen oder zusammengesetzt werden, kann das Ausgangsmaterial wegen der günstigeren Geometrie der Bänder besser genutzt und die Abfallmenge reduziert werden. Daraus folgt auch eine beträchtliche Kostenersparnis bei der Fertigung des Stators

Besonders zweckmäßig ist es, zwischen den Statorzähnen 4 Einkerbungen 7 im Band 6 vorzusehen, wie in Fig. 3 gezeigt. Dort ist ein Band in einer vorteilhaften Ausführung im gekrümmten Zustand beim Biegen skizziert. Beim Biegen des Bandes wölbt sich das Material an den Einkerbungen 7 nicht auf, und es erfordert weniger Kraft, einen dicken Blechstapel zu biegen, als ohne Einkerbungen. Vorteilhaft werden an den Einkerbungen Nasen 7.1 und Vertiefungen 7.2 vorgesehen, die beim Zusammenführen ineinandergreifen, und das Band ist mittels Verbindungsstegen 7.3 zusammengehalten.

Anschließend können die Statorzähne 4 mit Spulendraht 5 umwickelt werden. Bei einer Asynchronmaschine oder bei Maschinen, bei denen Spulen um mehr als einen Statorzahn gewickelt wird, kann der Spulendraht auch erst nach dem Formen des Stators eingebracht werden.

Dann wird das Band 6 zu seiner endgültigen Form gebogen oder aufgewickelt und in dieser Form fixiert. Die Stoßnaht 9 kann mit geeigneten Fügeverfahren hergestellt werden, insbesondere verschweißt oder verklebt werden.

In einer weiteren bevorzugten Ausführung werden Segmente 8 mit Statorzähnen 4 hergestellt. Dies ist in Fig. 4 gezeigt. Vorzugsweise weist ein einzelnes Segment 8 mindestens einen Statorzahn 4 auf. Die frei zugänglichen Zähne 4 werden mit Spulendraht 5 (nicht dargestellt) umwickelt. Anschließend werden die Segmente 8 zusammengefügt, bis ein geschlossener, insbesondere runder Umfang des Stators 1 gebildet ist und in dieser Form fixiert. Bei einem runden Stator sind kreisbogenförmige Segmente zweckmäßig. Die Segmente 8 können dazu bereits als Kreisbogen gestanzt oder auch als gerade Bänder gestanzt und vor dem Zusammensetzen oder auch nach dem Zusammensetzen gebogen werden.

Die Nahtstellen 9 des gebogenen Bandes 6 bzw. der zusammengefügten Segmente 8 können mit geeigneten Fügetechniken verbunden, insbesondere verklebt oder verschweißt werden, um Luftspalte im Stator 1 möglichst zu minimieren. Der Spulendraht 5 ist vorzugsweise aus einem kupferhaltigen und/oder einem aluminiumhaltigen Material gefertigt. Die Stoßstellen oder die Naht 9 der Segmente 8 oder des gebogenen Bandes 6 verlaufen in einer Ebene, welche senkrecht zur zentralen Achse 2 des Stators angeordnet ist.

Neben dem Vorteil der maschinellen Fertigung bei der Spulenwicklung ist ein weiterer Vorteil darin zu sehen, daß der Füllgrad der Spulendrähte 5, 5' zwischen den Statorzähnen 4 durch die ausgezeichnete Zugänglichkeit der Statorzähne 4 beim Wickeln optimal erhöht werden kann. Damit wird der Wirkungsgrad des Motors verbessert.

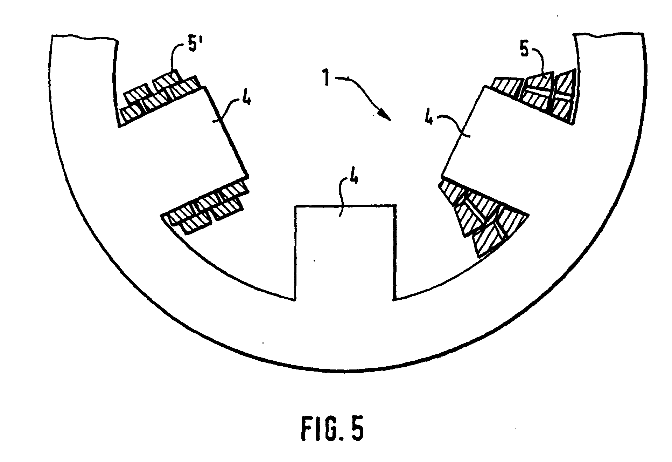

Eine weitere Möglichkeit der Wirkungsgradverbesserung ist in Fig. 5 dargestellt und besteht darin, daß der Spulendraht beim Aufwickeln zur Spule in seiner Querschnittsform geändert wird. In der Figur sind Drahtquerschnitte mit verändertem Querschnitt 5 und unverändertem Querschnitt 5' dargestellt.

In der endgültigen Form des Stators 1 ist zwischen den Statorzähnen 4 jeweils eine Nut 3 ausgebildet, welche die Spulendrähte aufnehmen. Die Nut 3 hat häufig einen trapezförmigen Querschnitt und/oder einen gerundeten Boden. In diesem Volumen soll das Material des Spulendrahts eingebracht werden. Je höher der Füllfaktor, desto höher ist der Wirkungsgrad. Bei Spulen mit sehr dickem Draht mit wenigen Windungen ist es sehr schwierig, den zur Verfügung stehenden Platz auszufüllen, da die Form der Nut zwischen den Statorzähnen 4 mit der Form des Spulendrahtes bzw. der Spulen nicht zusammenpaßt. Daher wird gemäß der Erfindung beim Aufwickeln einer Spule der Querschnitt des Drahtes verändert. Besonders bevorzugt wird der Querschnitt so verändert, daß sich der Spulendraht der Form des Stators 1 am Nutfuß anpaßt. Günstig sind auch im wesentlichen trapezförmige oder dreieckige Drahtquerschnitte. Nach dem Wickeln kann auch die ganze Spule verformt werden.

Die Spulen mit verformten Drahtquerschnitt können auch in einen konventionell gefertigten Stator 1 in üblicher Weise eingebracht werden, womit der Wirkungsgrad des Motors wegen' des daraus resultierenden erhöhten Füllfaktörs verbessert ist.

Mit Vorteil läßt sich auch der verformte Spulendraht auf Statorzähne 4 eines langgestreckten Stator-Bandes 6 oder auf Statorzähne 4 von Statorsegmenten 8 aufbringen.

Eine weitere günstige Ausführung ist, den Außendurchmesser der Spule zu verändern, insbesondere die Wicklungsbreite entlang eines Statorzahnes 4. Zweckmäßigerweise befindet der größte Außendurchmesser der Spule am Nutfuß des Stators 1.

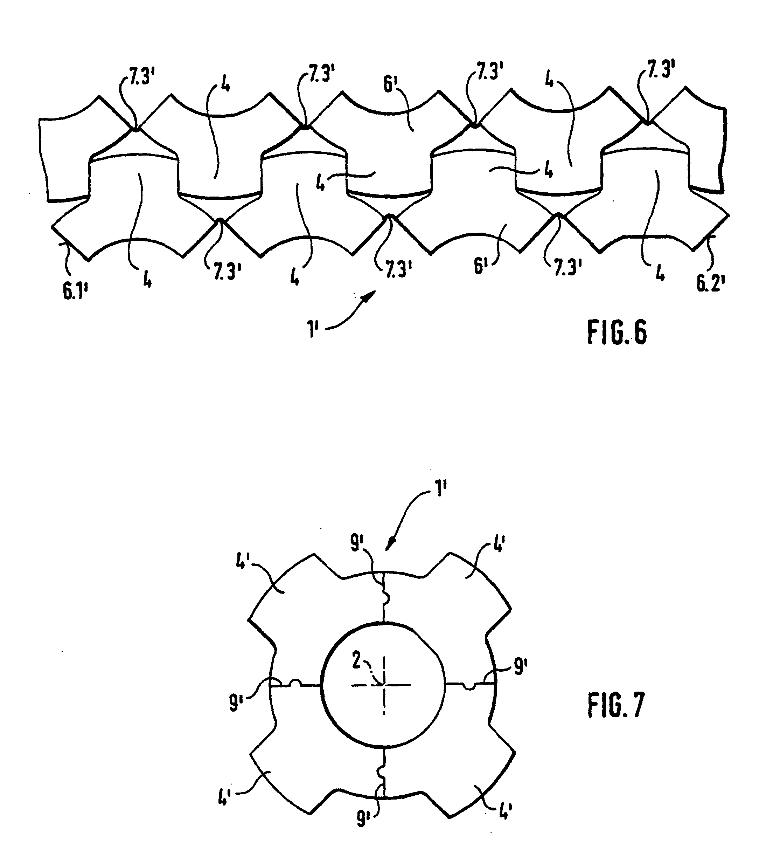

In Fig. 6 ist eine Prinzipdarstellung von zwei gestanzten Bändern 6' dargestellt, welche nach dem Formen einen Rotor 1' bilden. Die Bänder können sehr eng benachbart ausgestanzt werden; die Zähne 4' greifen ineinander. Dadurch wird erreicht, daß der Materialabfall beim Stanzen verglichen mit dem Stanzen runder Geometrien erheblich minimiert wird.

In Fig. 7 ist eine Draufsicht auf die Stirnfläche eines Rotors 1' dargestellt, der aus einem Band 6' gemäß Fig. 6 gebogen wurde. Nach bem Biegen weist der Rotor 1' Stoßnähte 9' auf, die in einer Ebene senkrecht zur zentralen Achse 2 verlaufen.

Es zeigt sich, daß die Stoßnähte 9, 9' von Rotor 1' und Stator 1 keine merklichen Verluste beim Betrieb der elektrischen Maschine verursachen. Luftspalte verschwinden beim Biegen der Bänder 6, 6', da das Material an den Stoßnähten innig aufeinandergepreßt wird. Auch sind geometrische Toleranzen genau genug einzuhalten, so daß ein erfindungsgemäß hergestellter Rotor 1' und ein erfindungsgemäß hergestellter Stator 1 in einer' elektrischen Maschine störungsfrei zusammenwirken können.

Es ist auch möglich, nur jeweils einen Stator 1 oder einen Rotor 1' der elektrischen Maschine aus Bändern 6, 6' bzw. Segmenten 8, 8' zu fertigen und mit einem konventionell hergestellten Rotor bzw. Stator anzuordnen.

Rotor 1' und Stator 1 können sowohl als Außenläufer- als auch als Innenläuferanordnung ausgebildet sein.

Der erfindungsgemäße Stator bzw. Rotor ist für verschiedene elektrische Maschinen, insbesondere für eine Reluktanzmaschine oder auch eine Asynchronmaschine geeignet.

## Patentansprüche

1. Verfahren zur Herstellung eines Stators (1) mit einer geschlossenen Umfangsform mit nach innen gerichteten Statorzähnen (4), wobei der Stator (1) in Umfangsrichtung aus mindestens zwei Segmenten (8) zusammengesetzt oder aus einem Band (6) gebogen wird, und wobei Statorzähne (4) mit Spulendraht (5) umwickelt werden,
**dadurch gekennzeichnet,**
**daß** beim Umwickeln der Statorzähne (4) die Querschnittsform des Spulendrahts (5) in der Nut des Stators geändert wird.

2. Verfahren nach Anspruch 1,
**dadurch gekennzeichnet,**
**daß** das Band aus zumindest zwei Segmenten (8) besteht und ein Segment (8) oder mehrere Segmente (8) vor dem Zusammensetzen des Stators (1) gebogen werden.

3. Verfahren nach Anspruch 2,
**dadurch gekennzeichnet,**
**daß** mindestens zwei Segmente (8) durch Zusammenschieben und/oder Einhaken zusammengefügt werden.

4. Verfahren nach Anspruch 1 oder 2,
**dadurch gekennzeichnet,**
**daß** die Zähne (4) mit dem Band (6) und/oder den Segmenten (8) jeweils einstückig sind.

5. Verfahren nach Anspruch 1 oder 2,
**dadurch gekennzeichnet,**
**daß** das Band (6) und/oder die Segmente (8) durch jeweils ein Blechpaket gebildet werden, wobei das Blechpaket durch entlang der zentralen Achse (2) aufeinandergelegte Blechscheiben hergestellt wird.

6. Verfahren nach Anspruch 5,
**dadurch gekennzeichnet,**
**daß** mindestens zwei Blechpakete aufeinandergestapelt werden, welche entlang der zentralen Achse (2) aufeinandergelegt sind.

7. Verfahren nach Anspruch 1,
**dadurch gekennzeichnet,**
**daß** bei der Herstellung des Stators Spulendraht (5) um mindestens einen Statorzahn (4) gewickelt wird, bevor das Band (6) zu einem Stator (1) umgeformt werden.

8. Verfahren nach Anspruch 1,
**dadurch gekennzeichnet,**
**daß** eine Spule um einen Statorzahn (4) mit Spulendraht (5) gewickelt wird, wobei der Außendurchmesser der Spule verändert wird, so daß der größere Außendurchmesser der Spule am Nutfuß ausgebildet wird.

9. Elektrische Maschine mit einem konzentrisch um eine zentrale Achse (2) angeordneten Stator (1), welcher durch ein Verfahren gemäß einem der vorangegangenen Ansprüchen hergestellt ist,
**dadurch gekennzeichnet,**
**daß** der Stator (1) zumindest eine Stoßnaht (9) in einer Ebene senkrecht zu seiner zentralen Achse (2) aufweist.

10. Stator für eine elektrische Maschine nach Anspruch 9, wobei der Stator (1) eine zentrale Achse (2) aufweist,
**dadurch gekennzeichnet,**
**daß** der Stator (1) zumindest eine Stoßnaht (9) in einer Ebene senkrecht zu seiner zentralen Achse (2) aufweist.

## Claims

1. A process for the production of a stator (1) with a closed circumferential form having inwardly oriented stator teeth (4), the stator (1) circumferentially either comprising at least two segments (8) or being bent from a strip (6) and the stator teeth (4) being wound round with coil wire (5),
**characterised in that**
as the stator teeth (4) are wound round, the cross-sectional shape of the coil wire (5) in the channel of the stator is altered.

2. A process in accordance with claim 1,
**characterised in that**
the strip consists of at least two segments (8) and one segment (8) or more segments (8) are bent prior to the assembly of the stator (1).

3. A process in accordance with claim 2,
**characterised in that**
at least two segments (8) are joined by being pushed and/or hooked together.

4. A process in accordance with claim 1 or 2,
**characterised in that**
the teeth (4) form one piece with the strip (6) and/or the segments (8).

5. A process in accordance with claim 1 or 2,
**characterised in that**
the strip (6) and or the segments (8) are each formed by a bundle of laminations, the bundle of laminations being produced using metal rounds placed one on top of the other along the central axis (2).

6. A process in accordance with claim 5,
**characterised in that**
at least two bundles of laminations are stacked one on top of the other and placed one on top of each other along the central axis (2).

7. A process in accordance with claim 1,
**characterised in that**
in the production of the stator, coil wire (5) is wound around at least one stator tooth (4) before the strip (6) is shaped to form a stator (1).

8. A process in accordance with claim 1,
**characterised in that**
a coil is wound around a stator tooth (4) with coil wire (5), the external diameter of the coil being altered so that the greater external diameter is formed at the foot of the channel.

9. An electrical machine with a stator (1) positioned concentrically about a central axis (2) which is produced by means of a process in accordance with one of the preceding claims,
**characterised in that**
the stator (1) has at least one butt weld (9) in a plane perpendicular to its central axis (2).

10. A stator for an electrical machine in accordance with claim 9, the stator (1) having a central axis (2),
**characterised in that**
the stator (1) has at least one butt weld (9) in a plane perpendicular to its central axis (2).

## Revendications

1. Procédé pour fabriquer un stator (1) possédant une forme périphérique fermée, comportant des dents (4) de stator, dirigées vers l'intérieur, le stator (1) étant constitué, dans la direction circonférentielle, par au moins deux segments (8) ou étant formé par coudage à partir d'une bande (6), et un fil de bobine (5) étant enroulé autour des dents (4) du stator, **caractérisé en ce**
**que** lors de l'enroulement autour des dents (4) du stator, on modifie la forme en coupe transversale du fil de bobine (5) dans l'encoche du stator.

2. Procédé selon la revendication 1, **caractérisé en ce**
**que** la bande est constituée par au moins deux segments (8) et qu'on coude un segment (8) ou plusieurs segments (8) avant l'assemblage du stator (1).

3. Procédé selon la revendication 2, **caractérisé en ce**
**qu'**on réunit au moins deux segments (8) par assemblage et/ou accrochage.

4. Procédé selon la revendication 1 ou 2,
**caractérisé en ce**
**que** les dents (4) sont réalisées respectivement d'un seul tenant avec la bande (6) et/ou avec les segments (8).

5. Procédé selon la revendication 1 ou 2,
**caractérisé en ce**
**qu'**on forme la bande (6) respectivement au moyen d'un paquet de tôles, le paquet de tôles étant fabriqué au moyen de disques en tôle qui sont juxtaposés le long de l'axe central (2).

6. Procédé selon la revendication 5, **caractérisé en ce**
**qu'**on empile au moins deux paquets de tôles, qui sont juxtaposés le long de l'axe central (2).

7. Procédé selon la revendication 1, **caractérisé en ce**
**que** lors de la fabrication du stator, on enroule le fil de bobine (5) autour d'au moins une dent (4) du stator avant de conformer la bande (6) sous la forme d'un stator (1).

8. Procédé selon la revendication 1, **caractérisé en ce**
**qu'**on enroule une bobine autour d'une dent (4) du stator avec un fil de bobine (5), le diamètre extérieur de la bobine étant modifié de telle sorte que le diamètre extérieur le plus grand de la bobine est formé au niveau du fond des encoches.

9. Machine électrique comportant un stator (1) qui est disposé concentriquement autour d'un axe central (2) et qui est réalisé à l'aide d'un procédé selon l'une des revendications précédentes, **caractérisée en ce**
**que** le stator (1) comporte au moins une liaison d'aboutement (9) dans un plan perpendiculaire à son axe central (2).

10. Stator pour une machine électrique selon la revendication 9, dans lequel le stator (1) possède un axe central (2), **caractérisé en ce**
**que** le stator (1) comporte au moins une liaison d'aboutement (9) dans un plan perpendiculaire à son axe central (2).
